# EUROPEAN PATENT APPLICATION

(11) **EP 1 717 806 A1**
(43) Date of publication of application: **02.11.2006**
(21) Application number: 05252639.9
(22) Date of filing: 27.04.2005
(51) Int. Cl.: G11B 27/00, G11B 27/10, G11B 27/34, G11B 27/034

(54) **Method for playing a repeat segment**

(71) Applicant: Tatung Co., Ltd., Taipei City 104, R.O.C. (TW)
(72) Inventor: Hsu, Guang-Min, Jhongshan District, Taipei city 104 (TW); Wang, Yueh-Chi, Jhongshan District, Taipei city 104 (TW); Cheh, Yi-Ru, Jhongshan District, Taipei city 104 (TW); Chen, Chun-Ru, Jhongshan District, Taipei city 104 (TW)
(74) Representative: Tranter, Andrew David

(57) **Abstract**

The present invention relates to a method for playing a repeat segment, which can be applied to portable electronic devices. The method for playing a repeat segment includes: inputting a repeat segment starting time; inputting a repeat segment ending time; and beginning to play an electronic file at the starting time and stopping playing the electronic file at the ending time, thus enabling to reach more accurately inputted time points of a repeat segment.

## Description

### BACKGROUND OF THE INVENTION

### 1. Field of the Invention

The present invention relates to a method for playing a repeat segment and more particularly, to a method for playing a repeat segment that can be utilized on a portable electronic device.

### 2. Description of Related Art

Heading toward the digital era, development of the video/audio products have come from outdated FM radio, stereo systems with cassettes and eventually progressed to nowadays a variety of portable multimedia devices such as VCD, DVD, MP3 players and Personal Digital Assistant (PDA). Along with their modernized designs these devices not only possess portability, but also have numerous functions including playback, and voices or videos recording. Among the playback function there are also the segment repeat playback, single file repeat playback, and etc.
Conventional portable electronic devices generally utilize one button to set both the starting and the ending time of a repeat segment; however, such application can not accurately locate the exact time points of the segment which users are looking for, and also can not allow previewing the time points after those being set. Due to lack of capability for users to precisely set the time points of a repeat segment, it is necessary to come up with a solution.

### SUMMARY OF THE INVENTION

The present invention discloses a method for playing a repeat segment that can be utilized on a portable electronic device, which can be an MP3 player, a PDA, or an electronic language-learning device. The method for playing a repeat segment comprises the steps of: (A) inputting a segment repeat starting time; (B) inputting a segment repeat ending time, wherein step A and B further comprise step A1 and B1 respectively in which a preview for a default length of time of the electronic file is played for five seconds each; and (C) beginning to play the electronic file at the starting time set in step (A) and stopping playing the electronic file at the ending time set in step (B).

Also the method for playing a repeat segment of the present invention is applied when the 'repeat segment' function is selected during playback/pause of the electronic file. After inputting both the starting and the ending time of the repeat segment, the electronic file is then repeated from the starting point to the ending point of the segment.

### BRIEF DESCRIPTION OF THE DRAWINGS

FIG. 1 a flowchart demonstrating the method for playing a repeat segment according to the present invention.
FIG. 2(a) ~ (e) is a schematic drawing showing the preferred embodiment of the present invention.

### DETAILED DESCRIPTION OF THE PREFERRED EMBODIMENT

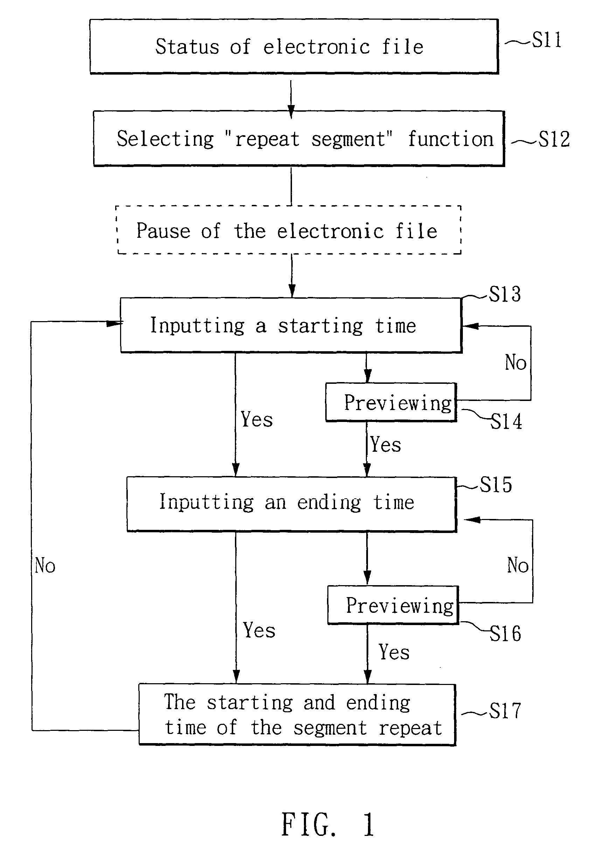

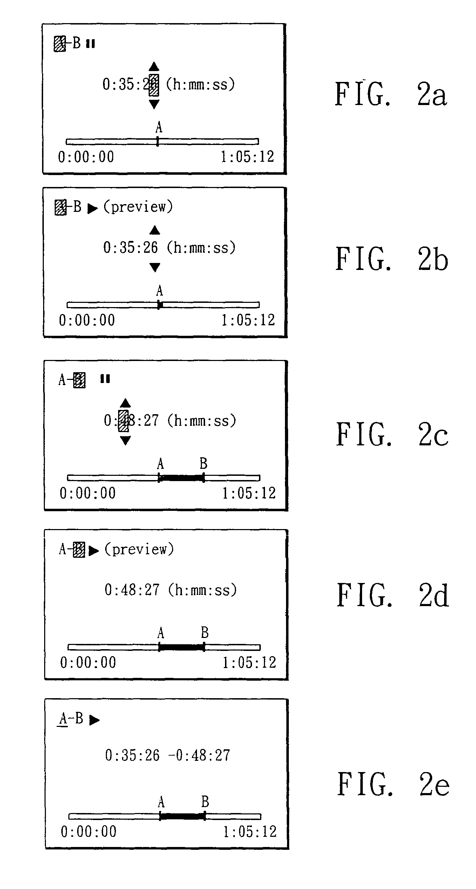

Please refer to both FIG. 1, a flow chart demonstrating the segment repeat, and FIG. 2, a schematic drawing showing the preferred embodiment of the present invention. Status of an electronic file is displayed on the screen of a PDA (step S11), for example, the total length of time of the electronic file being displayed on the bottom right hand corner of the screen. According to this embodiment, the total length of time of the electronic file is one hour, five minutes and twelve seconds long. The 'repeat segment' function is then selected (step S12). If the PDA is at the time playing an electronic file, that electronic file will automatically be paused when a repeat segment starting time `A', at thirty-five minutes and twenty-six seconds as FIG. 2a shown, is then inputted.

After inputting the starting time 'A' at thirty-five minutes and twenty-six seconds, the starting time 'A' of the electronic file can be previewed for a default length of time in order to confirm whether the inputted starting time 'A' is correct. The default length of time for previewing is five seconds long. If the result from the previewing is not the starting time the user intended for, the procedure returns to step S 13. On the contrary if the result from the previewing matches the starting time the user intended for, then an ending time B, at forty-eight minutes and twenty-seven seconds as shown in FIG. 2c, is inputted (step S 15).

Similarly after inputting the ending time B at forty-eight minutes and twenty-seven seconds, the ending time B of the electronic file can be previewed for a default length of time (step S16) to confirm whether the inputted ending time B is correct. The default length of time for previewing is also 5 seconds long as shown in FIG. 2d. If the result from previewing is not the ending time the user intended for, the procedure goes back to step S 15. On the contrary if the result from previewing matches the ending time the user intended for, a repeat segment of the electronic file is then set from said starting time 'A' to ending time B (step S 17), which is from 35 minutes and 26 seconds to 48 minutes and 27 seconds as shown in FIG. 2e.

Other than providing more accurately inputted starting and ending times, the above mentioned method further offers a default length of time of previewing to allow users to yet again ensure whether the starting and ending time of the segment repeat are correctly inputted, thus satisfying PDA users' demands for practical functions.
Although the present invention has been explained in relation to its preferred embodiment, it is to be understood that many other possible modifications and variations can be made without departing from the spirit and scope of the invention as hereinafter claimed.

## Claims

1. A method for playing a repeat segment utilized on a portable electronic device, comprising the steps of:
(A) inputting a repeat segment starting time;
(B) inputting a repeat segment ending time; and
(C) beginning to play an electronic file at said starting time and stopping playing said electronic file at said ending time.

2. The method for playing a repeat segment as claimed in claim 1, wherein said step (A) further includes: (A1) previewing for a default length of time of said electronic file.

3. The method for playing a repeat segment as claimed in claim 2, wherein said default length of time lasts five seconds.

4. The method for playing a repeat segment as claimed in claim 1, wherein said step (B) further includes: (B1) previewing for a default length of time of said electronic file.

5. The method for playing a repeat segment as claimed in claim 4, wherein said default length of time lasts five seconds.

6. The method for playing a repeat segment as claimed in claim 1, wherein said portable electronic device is an MP3 player.

7. The method for playing a repeat segment as claimed in claim 1, wherein said portable electronic device is a Personal Digital Assistant.

8. The method for playing a repeat segment as claimed in claim 1, wherein said portable electronic device is a personal language-learning electronic device.
